# FASCICULE DE BREVET EUROPEEN

(11) **EP 1 493 369 B1**
(45) Date de publication et mention de la délivrance du brevet: **15.02.2006**
(21) Numéro de dépôt: 04356111.7
(22) Date de dépôt: 25.06.2004
(51) Int. Cl.: A47J 42/56, A47J 43/046

(54) **Appareil électroménager de préparation culinaire comportant un récipient de travail et un couvercle verrouilles sur un boîtier**
Küchenmaschine mit einer Schüssel und einem auf dem Gehäuse verriegelten Deckel
Food processor with a working vessel and a lid locked on the housing

(30) Priorité: 03.07.2003 FR 0308133
(43) Date de publication de la demande: 05.01.2005
(73) Titulaire: SEB S.A., 69130 Ecully (FR)
(72) Inventeur: Beaudet, Jean Yves, 61410 Haleine (FR)
(74) Mandataire: Kiehl, Hubert

(56) Documents cités:
- FR-A- 2 717 361
- FR-A- 2 818 525
- US-A- 4 108 054
- US-A- 5 809 872

## Description

La présente invention concerne le domaine technique des appareils électroménagers de préparation culinaire comportant un récipient de travail monté sur un boîtier contenant une motorisation.

Dans les appareils du type précité, le récipient de travail comporte un accessoire de travail rotatif à entraînement inférieur. Ces appareils comprennent notamment les appareils prévus pour le mélange de préparations liquides tels que les blenders, comportant une sortie d'entraînement sur le dessus du boîtier. Ces appareils comprennent également les robots culinaires comportant une ou plusieurs sorties d'entraînement sur le dessus du boîtier.

Il est connu du document WO 02/051293 un robot culinaire comportant un boîtier présentant un montant adjacent à un socle, un récipient de travail monté amovible sur le socle, un couvercle fermant le récipient de travail, et une pièce de maintien montée sur le montant, prévue pour coopérer avec le récipient de travail. La pièce de maintien est mobile entre une position déverrouillée, dans laquelle le couvercle peut être mis en place et retiré du récipient de travail disposé sur le socle, et une position de verrouillage, dans laquelle la pièce de maintien retient le couvercle sur le récipient de travail disposé sur le socle.

Cette disposition permet un verrouillage du couvercle facile à utiliser. Cette disposition s'avère toutefois dans la pratique insuffisante pour assurer un maintien satisfaisant du récipient de travail sur le socle lors de la réalisation de préparations, à cause des vibrations. Une solution consiste alors à prévoir un verrouillage par baïonnette du récipient de travail sur le socle. Toutefois, la qualité de l'ergonomie de l'appareil apportée par le verrouillage du couvercle est alors diminuée.

Le document US-A-5809872 décrit un appareil électroménager selon le préambule de la revendication indépendante 1.

L'objet de la présente invention est de proposer un appareil électroménager de préparation culinaire du type précité, dans lequel la mise en place et le retrait du couvercle et du récipient de travail sont particulièrement aisés.

Un autre objet de la présente invention est de proposer un appareil électroménager de préparation culinaire du type précité, dans lequel le maintien du récipient de travail sur le socle du boîtier est fermement assuré.

Un autre objet de la présente invention est de proposer un appareil électroménager de préparation culinaire du type précité, dans lequel le maintien du couvercle sur le récipient de travail est fermement assuré.

Un autre objet de la présente invention est de proposer un appareil électroménager de préparation culinaire du type précité, dans lequel le couvercle peut être mis en place sur le récipient de travail sans orientation particulière.

Ces objets sont atteints avec un appareil électroménager de préparation culinaire, comportant un boîtier présentant un montant adjacent à un socle, un récipient de travail monté amovible sur le socle, un couvercle fermant le récipient de travail, une pièce de maintien montée sur le montant, la pièce de maintien étant mobile entre une position déverrouillée, dans laquelle le couvercle peut être mis en place et retiré du récipient de travail disposé sur lé socle, et une position de verrouillage, dans laquelle la pièce de maintien maintient le couvercle sur le récipient de travail disposé sur le socle, du fait que la pièce de maintien coopère avec un dispositif de verrouillage inférieur agencé dans le boîtier, le dispositif de verrouillage inférieur comportant un organe de verrouillage inférieur agencé dans le socle, l'organe de verrouillage inférieur étant mobile entre une position rétractée dans laquelle le récipient de travail peut être retiré du socle, lorsque la pièce de maintien occupe la position déverrouillée, et une position sortie dans laquelle l'organe de verrouillage inférieur retient un organe de retenue inférieur ménagé sur le récipient de travail, lorsque la pièce de maintien occupe la position de verrouillage. Cette disposition permet une mise en place du couvercle et du récipient de travail particulièrement aisée, du fait qu'une simple mise en place selon la direction verticale suffit. Le retrait du récipient de travail est également facilité. II n'est pas nécessaire de procéder à un mouvement de rotation du récipient de travail ou du couvercle. II suffit de manoeuvrer la pièce de maintien entre la position verrouillée et la position déverrouillée pour obtenir le verrouillage et permettre le fonctionnement de l'appareil. L'organe de verrouillage inférieur actionné par l'intermédiaire de la pièce de maintien permet de solidariser le récipient sur le socle sans autre manipulation particulière. De plus, si le couvercle présente une géométrie de révolution sur au moins une partie de sa périphérie, il n'est pas nécessaire de procéder à une orientation précise du couvercle. Il est également possible de choisir une orientation désirée pour le couvercle. Le couvercle est maintenu par le boîtier d'un seul côté, ce qui facilite la vision du contenu du récipient. L'appareil proposé est ainsi particulièrement ergonomique.

Avantageusement, la pièce de maintien coopère avec une tige de transmission de verrouillage agencée dans le montant. Cette disposition permet de simplifier la construction du dispositif de verrouillage inférieur, en utilisant de préférence un mouvement de translation pour ladite tige. D'autres formes de réalisation peuvent toutefois être envisagées, notamment en utilisant une bascule ou un levier actionné par la tige de maintien.

Avantageusement alors, la tige de transmission de verrouillage est montée mobile contre un moyen de rappel élastique. En alternative, d'autres types de moyens de rappel peuvent être envisagés, par exemple par gravité.

Avantageusement encore, l'organe de verrouillage inférieur appartient à un levier pivotant agencé dans le socle. Cette disposition permet de simplifier la construction du dispositif de verrouillage inférieur. De préférence alors, le levier pivotant est actionné par la tige de transmission de verrouillage.

Avantageusement alors, le levier pivotant est associé à un moyen de rappel élastique. En alternative, d'autres types de moyens de rappel peuvent être envisagés, par exemple par gravité.

Avantageusement encore le dispositif de verrouillage inférieur coopère avec un dispositif de verrouillage latéral agencé sur le récipient de travail, le dispositif de verrouillage latéral comportant un organe de verrouillage supérieur mobile entre une position rétractée dans laquelle le couvercle peut être retiré du récipient de travail et une position sortie dans laquelle l'organe de verrouillage supérieur retient un organe de retenue supérieur ménagé sur le couvercle. Cette disposition permet d'obtenir un verrouillage en trois points de l'ensemble récipient de travail et couvercle. La hauteur de l'emboîtement du couvercle et du récipient peut alors être réduite.

Avantageusement alors l'organe de verrouillage supérieur appartient à un levier basculant. Cette disposition permet de simplifier la construction du dispositif de verrouillage latéral.

Avantageusement alors le dispositif de verrouillage latéral est agencé dans une poignée du récipient de travail. La poignée peut notamment être opaque alors que le récipient est transparent.

Avantageusement alors la poignée est amovible, notamment pour faciliter le nettoyage du récipient de travail au lave vaisselle sans risquer d'endommager le dispositif de verrouillage latéral.

Avantageusement alors la tige de transmission de verrouillage présente un organe de transmission inférieur coopérant avec un organe de commande latéral du levier pivotant et l'organe de transmission inférieur comporte une conformation de blocage dans laquelle s'engage l'organe de commande latéral repoussé par le moyen de rappel élastique lorsque la poignée est absente du récipient de travail en place sur le socle ou que le récipient de travail n'est pas en place sur le socle. Cette disposition permet d'éviter le fonctionnement de l'appareil lorsque le dispositif de verrouillage latéral n'est pas opérationnel.

Selon un premier mode de réalisation, la pièce de maintien est formée par un capot monté basculant sur le montant, le capot comportant un élément d'accrochage coopérant avec un élément de retenue monté mobile dans le boîtier, l'élément de retenue étant associé à un bouton de déverrouillage. En alternative, le bouton de déverrouillage pourrait être monté mobile sur le capot et porter l'élément d'accrochage, l'élément de retenue pouvant alors être simplement ménagé sur le boîtier.

Avantageusement alors le capot comporte un organe de transmission inférieur coopérant avec un organe de commande supérieur du dispositif de verrouillage inférieur. Le dispositif de verrouillage inférieur peut comporter une ou plusieurs transmissions intermédiaires entre l'organe de commande supérieur et l'organe de verrouillage inférieur, voire aucune.

Avantageusement alors le capot comporte une paroi latérale de retenue coopérant avec une paroi supérieure du couvercle. La paroi supérieure du couvercle peut présenter au moins partiellement une géométrie de révolution.

Selon un deuxième mode de réalisation, la pièce de maintien est formée par un verrou rotatif monté pivotant sur le montant. Le verrou rotatif occupe une position de verrouillage stable ; l'utilisateur tourne simplement le verrou rotatif pour atteindre la position de déverrouillage.

Avantageusement alors le verrou rotatif comporte une surface de came actionnant un organe de commande supérieur du dispositif de verrouillage inférieur. Après la position déverrouillée puis la position de verrouillage, le verrou rotatif peut atteindre une ou plusieurs positions commandant le fonctionnement de l'appareil après la position de verrouillage. Le dispositif de verrouillage inférieur peut comporter une ou plusieurs transmissions intermédiaires entre l'organe de commande supérieur et l'organe de verrouillage inférieur, voire aucune.

Avantageusement, le socle et le récipient de travail comportent des moyens de blocage en rotation du récipient de travail par rapport au boîtier. En alternative, le dispositif de verrouillage inférieur peut suffire à bloquer en rotation le récipient de travail.

L'invention sera mieux comprise à l'étude de deux exemples de réalisation, pris à titre nullement limitatif, illustrés dans les figures annexées, dans lesquelles :
- la figure 1 est une vue en perspective d'un appareil de préparation culinaire comportant un dispositif de verrouillage supérieur et un dispositif de verrouillage inférieur selon un premier exemple de réalisation de l'invention,
- la figure 2 est une vue en perspective et en coupe partielle de la partie supérieure du boîtier de l'appareil montré à la figure 1, montrant le dispositif de verrouillage supérieur ainsi que le dispositif de déverrouillage,
- la figure 3 est une vue en perspective d'une partie du dispositif de déverrouillage visible à la figure 2, le boîtier ayant été partiellement retiré,
- la figure 4 est une vue en coupe partielle d'une partie du dispositif de verrouillage supérieur visible aux figures 2 et 3,
- la figure 5 est une vue en perspective d'une autre partie du boîtier de l'appareil montré à la figure 1,
- la figure 6 est une vue de côté du récipient de travail et du couvercle de l'appareil montré à la figure 1, dans laquelle la coque de la poignée du récipient de travail est illustrée schématiquement pour laisser voir un dispositif de verrouillage latéral agencé dans la poignée,
- la figure 7 est une vue en perspective de dessous du couvercle de l'appareil montré à la figure 1,
- la figure 8 est une vue en perspective de la poignée retirée du récipient de l'appareil montré à la figure 1,
- la figure 9 est une vue en perspective de l'appareil montré à la figure 1, dans laquelle le boîtier, le récipient de travail et le couvercle sont illustrés schématiquement pour laisser voir le dispositif de verrouillage latéral et le dispositif de verrouillage inférieur,
- la figure 10 est une vue en perspective selon une autre orientation de l'appareil montré à la figure 1, dans laquelle le boîtier, le récipient de travail et le couvercle sont illustrés schématiquement pour laisser voir le dispositif de verrouillage supérieur, le dispositif de verrouillage latéral et le dispositif de verrouillage inférieur,
- la figure 11 montre une partie du dispositif de verrouillage inférieur illustré à la figure 6,
- la figure 12 montre la liaison entre le dispositif de verrouillage supérieur illustré aux figures 2 et 4 et le dispositif de verrouillage inférieur illustré à la figure 10,
- la figure 13 est une vue de côté de l'appareil illustré à la figure 1 avec le capot fermé, le récipient de travail et le couvercle étant présents mais non représentés, une partie du boîtier ayant été ôtée pour montrer le dispositif de sécurité,
- la figure 14 est une vue en perspective de l'appareil montré à la figure 1, dans laquelle le dispositif de verrouillage latéral et le dispositif de verrouillage supérieur sont en position déverrouillée, le récipient de travail étant illustré schématiquement, le couvercle étant absent,
- la figure 15 est une vue en perspective de l'appareil montré à la figure 1, dans laquelle le dispositif de verrouillage latéral et le dispositif de verrouillage supérieur sont en position verrouillée, le récipient de travail et le couvercle étant illustrés schématiquement,
- la figure 16 est une vue en perspective de l'appareil montré à la figure 1, dans laquelle le dispositif de verrouillage latéral et le dispositif de verrouillage supérieur sont en position verrouillée, le récipient de travail étant illustré schématiquement, le couvercle étant absent.
- la figure 17 est une vue en perspective d'un deuxième exemple de réalisation, dans laquelle le dispositif de verrouillage latéral et le dispositif de verrouillage supérieur sont en position déverrouillée,
- la figure 18 est une vue en perspective de l'appareil montré à la figure 17, dans laquelle le dispositif de verrouillage latéral et le dispositif de verrouillage supérieur sont en position verrouillée,
- la figure 19 est une vue schématique d'une première partie du dispositif de sécurité de l'appareil illustré aux figures 17 et 18,
- la figure 20 est une vue schématique d'une deuxième partie du dispositif de sécurité et d'une partie du dispositif de verrouillage inférieur de l'appareil illustré aux figures 17 et 18.

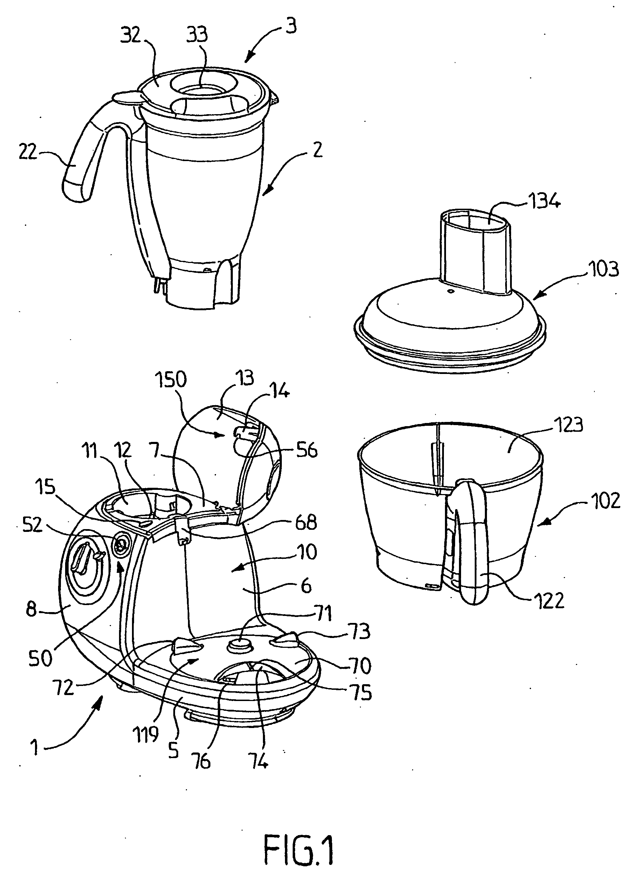

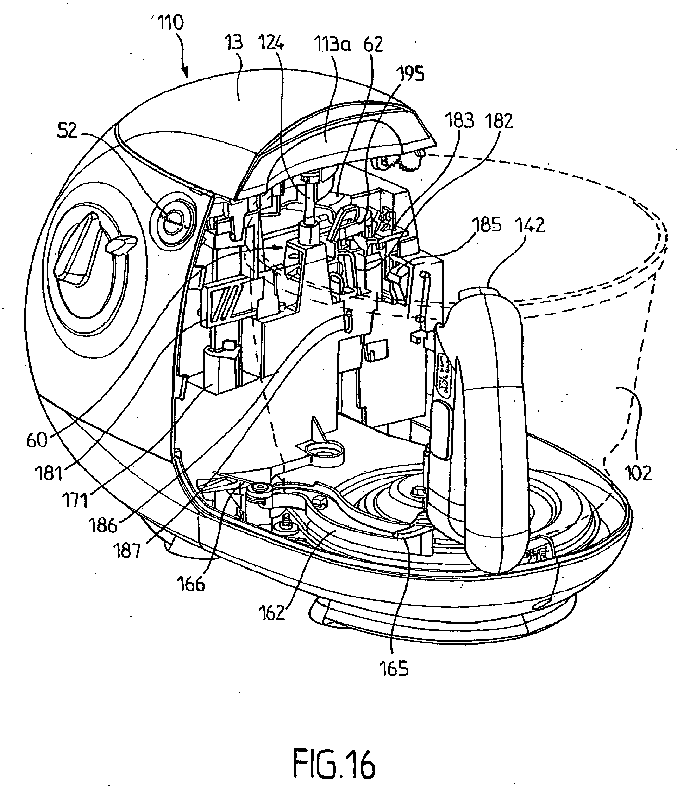

Un premier exemple de réalisation est illustré aux figures 1 à 16. La figure 1 montre un appareil de préparation culinaire comportant un boîtier 1, un récipient de travail 2 fermé par un couvercle 3, et un récipient de travail 102 fermé par un couvercle 103. Le récipient de travail 2 est prévu plus particulièrement pour les préparations liquides. Le récipient de travail 102 est de préférence un récipient de travail multifonctions à accessoires de préparation rotatifs interchangeables. La coque extérieure du boîtier 1 comporte une base 5, un corps 6, un siège 7 et une façade 8.

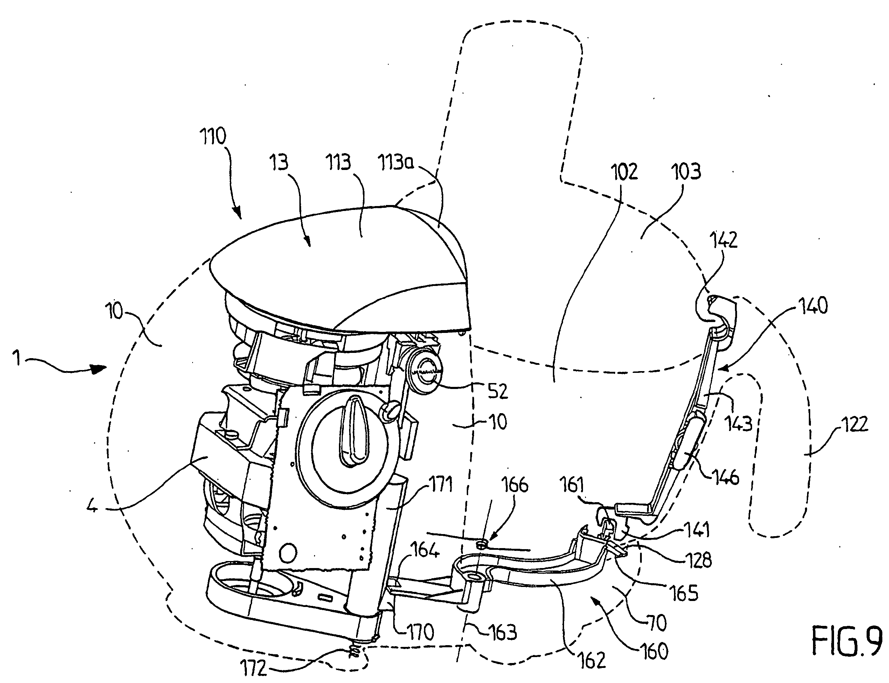

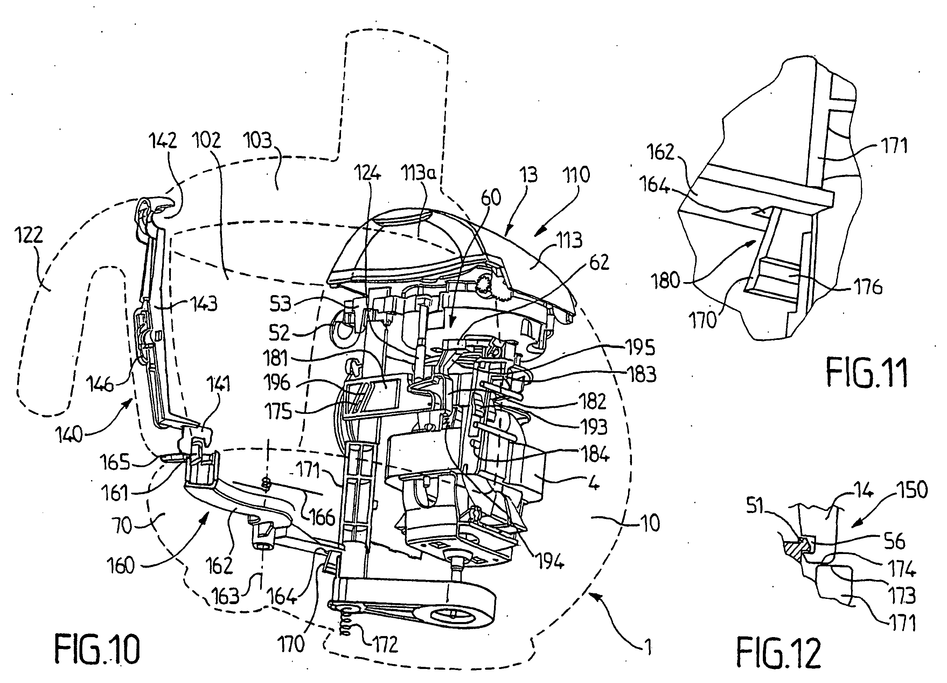

Le boîtier 1 présente un montant 10 dans lequel est logé un moteur 4 (visible aux figures 9 et 10). La partie supérieure du montant 10 présente un logement 11 dans lequel est agencé un axe 12 entraîné par le moteur. L'axe 12 porte un moyen d'entraînement, non représenté à la figure 1, prévu pour entraîner en rotation un accessoire de travail rotatif monté dans le fond du récipient de travail 2. Le montant 10 présente une encoche latérale supérieure 68.

Un capot 13 est monté basculant sur le montant 10. Plus particulièrement, le capot est monté pivotant sur l'arrière du montant 10, à l'opposé de la façade 8. L'axe de rotation du capot 13 s'étend en direction du récipient de travail 102 et du couvercle 103. Le capot 13 permet de coiffer le logement 11. Le capot 13 comporte une languette inférieure 14 prévue pour être engagée dans une découpe 15 ménagée sur le dessus du montant 10. Le capot 13 comporte un élément d'accrochage 56, tel que par exemple une encoche. L'élément d'accrochage 56 est ménagé sur la languette inférieure 14. Le logement 11 est ménagé dans le siège 7. Le capot 13 est monté pivotant sur le corps 6. La découpe 15 est ménagée dans le siège 7.

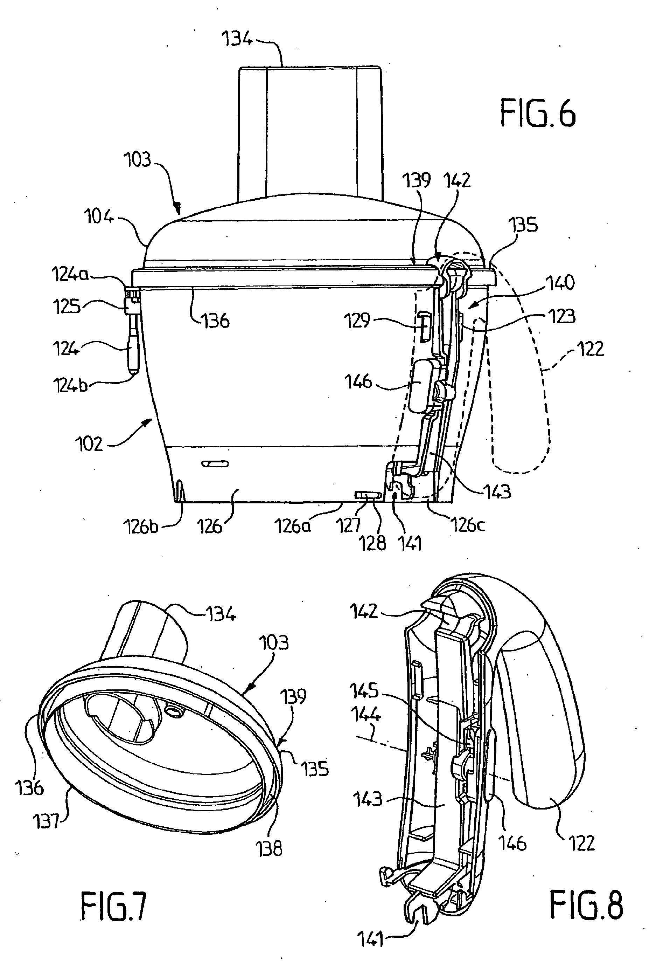

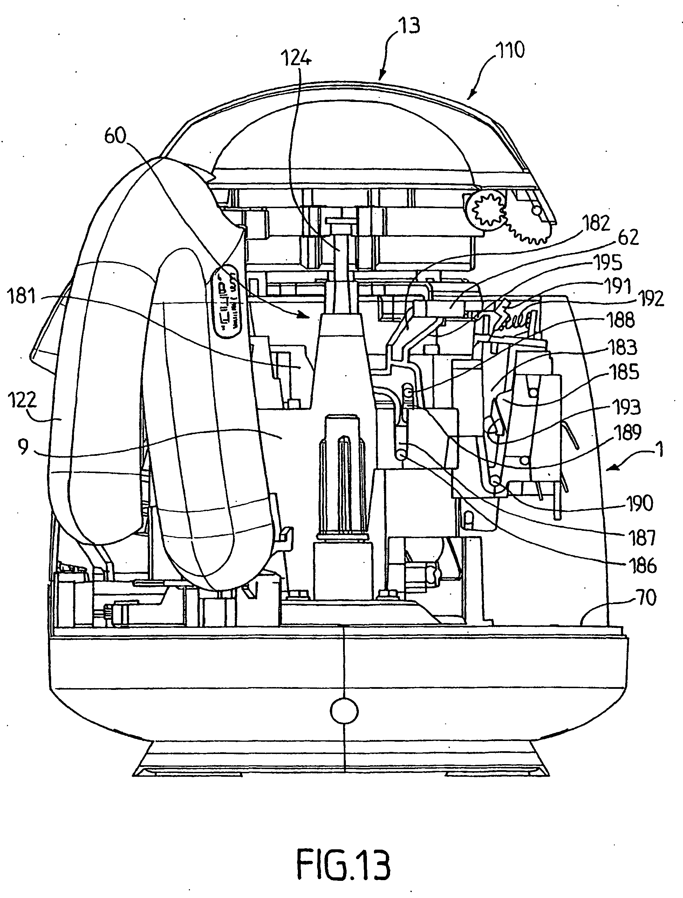

Le montant 10 est adjacent à un socle 70 du boîtier 1. Le récipient de travail 102 est monté amovible sur le socle 70. A cet effet, le socle 70 présente un passage 71 pour un axe entraîneur prévu pour entraîner un accessoire de travail rotatif agencé dans le récipient de travail 102, non représenté aux figures, l'axe entraîneur étant visible à la figure 13. Le socle 70 comporte trois bossages supérieurs 72, 73, 74. Le bossage supérieur 74, mieux visible à la figure 5, présente une découpe supérieure 75 et une découpe latérale extérieure 76.

Le récipient de travail 2 comporte une poignée 22 et une ouverture supérieure susceptible d'être fermée par le couvercle 3. Le couvercle 3 comporte une couronne supérieure 32 percée d'un orifice de remplissage 33.

Le récipient de travail 102 comporte une poignée 122 et une ouverture supérieure 123 susceptible d'être fermée par le couvercle 3. Le couvercle 3 comporte une goulotte 134.

Le boîtier 1 comporte un dispositif de déverrouillage 50 prévu pour libérer le capot 13 et un dispositif de verrouillage supérieur 150 prévu pour retenir le couvercle 103 fermant le récipient de travail 102 disposé sur le socle 70.

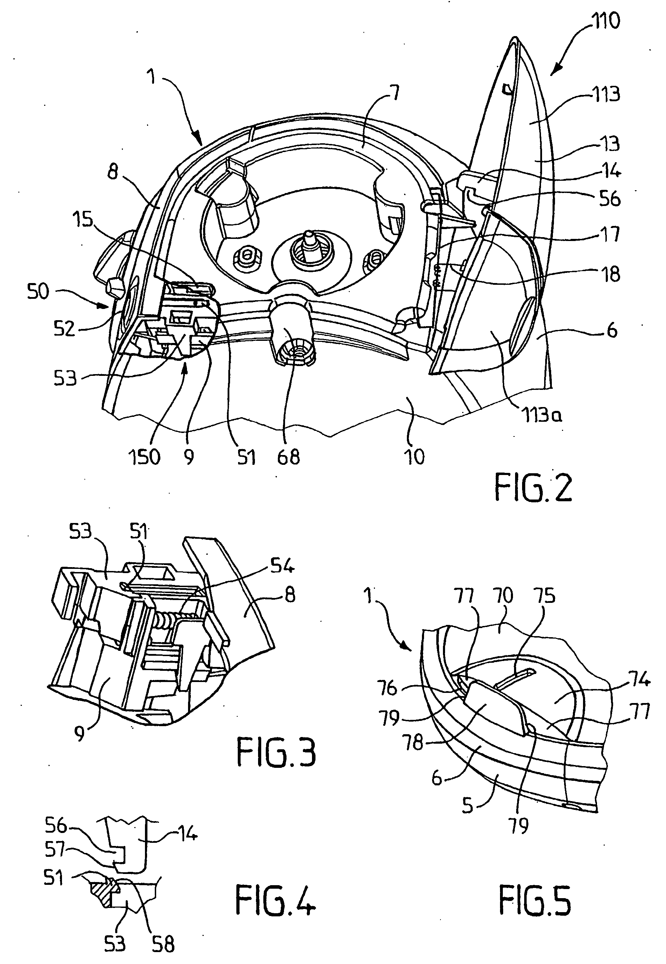

La figure 2 montre plus en détail le dispositif de déverrouillage 50 et le dispositif de verrouillage supérieur 150. Une partie du corps 6 et une partie du siège 7 ont été retirées pour une meilleure compréhension des mécanismes. Le capot 13 est monté pivotant sur une tige 17 montée sur le corps 6. Un moyen de rappel élastique 18 permet de relever le capot 13. Le capot 13 comporte une trappe 113 montée basculante sur le boîtier 1. Une paroi latérale de retenue 113a est formée sur la trappe. La paroi latérale de retenue 113a est par exemple obtenue par surmoulage de matière élastomère sur la trappe 113. La paroi latérale de retenue 113a appartient au dispositif de verrouillage supérieur 150. La paroi latérale de retenue 113a permet d'immobiliser en rotation le couvercle 103 par frottement.

Le dispositif de verrouillage supérieur 150 comporte un élément de retenue 51 monté mobile dans le boîtier 1. L'élément de retenue 51 est agencé dans le montant 10 derrière la découpe 15. L'élément de retenue 51 est susceptible de coopérer avec l'élément d'accrochage 56 agencé sous le capot 13. L'élément de retenue 51 est entraîné par un bouton de déverrouillage 52 appartenant au dispositif de déverrouillage 50.

Le bouton de déverrouillage 52 associé à l'élément de retenue 51 est monté mobile contre un moyen de rappel élastique 54, visible sur la figure 3. Le bouton de déverrouillage 52 est agencé sur la façade 8. Le bouton de déverrouillage 52 est issu d'une glissière 53 montée coulissante dans le boîtier 1. La glissière 53 coulisse sur un bâti 9 monté dans le boîtier 1. Le bâti 9 supporte le moteur 4, visible aux figures 9 et 10.

La figure 3 montre la glissière 53 coulissant sur le bâti 9, le siège 7 et le corps 6 ayant été ôtés. Le moyen de rappel élastique 54 est monté entre le bâti 8 et la glissière 53. Le bouton de déverrouillage 52 est ainsi monté mobile contre le moyen de rappel élastique 54. L'élément de retenue 51 prévu pour coopérer avec l'élément d'accrochage 56 du capot 13 est ménagé sur la glissière 53.

La figure 4 montre l'élément d'accrochage 56 formé sur la languette 14 et l'élément de retenue 51 formé sur la glissière 53. L'élément d'accrochage 56 est prolongé par une surface biseautée inférieure 57 et l'élément de retenue 51 présente une surface biseautée supérieure 58 pour permettre de repousser la glissière 53 contre le moyen de rappel élastique 54 (visible à la figure 3) lorsque le capot 13 est rabattu sur le montant 10. L'élément d'accrochage 56 et l'élément de retenue 51 appartiennent au dispositif de verrouillage supérieur 150.

La figure 5 montre le bossage supérieur 74. La découpe latérale extérieure 76 est ménagée dans une paroi latérale extérieure 77 servant également à centrer le récipient de travail 102 sur le socle 70. La paroi latérale extérieure 77 coopère avec la face interne de la jupe 126. Le bossage supérieur 74 comporte une protubérance latérale externe 78 présentant deux faces latérales 79 servant à bloquer en rotation le récipient de travail 102 sur le socle 70.

Le bossage supérieur 72 et le bossage supérieur 73 visibles à la figure 1 comportent également une paroi latérale extérieure servant également à centrer le récipient de travail 102 sur le socle 70, et une protubérance latérale externe présentant deux faces latérales servant à bloquer en rotation le récipient de travail 102 sur le socle 70.

La figure 6 montre le couvercle 103 sur le récipient de travail 102. La coque de la poignée 122 a été retirée pour montrer un dispositif de verrouillage latéral 140 agencé sur le récipient de travail 102. Plus particulièrement, le dispositif de verrouillage latéral 140 est monté dans la poignée 122. Le dispositif de verrouillage latéral 140 coopère avec un dispositif de verrouillage inférieur 160 agencé dans le boîtier 1, visible aux figures 9 et 10. Le dispositif de verrouillage latéral 140 comporte un organe de commande inférieur 141 et un organe de verrouillage supérieur 142. L'organe de commande inférieur 141 coopère avec le dispositif de verrouillage inférieur 160. L'organe de verrouillage supérieur 142 coopère avec un bord périphérique supérieur 135 du couvercle 103. Le bord périphérique supérieur 135 forme un organe de retenue supérieur 139. L'organe de commande inférieur 141 et l'organe de verrouillage supérieur 142 appartiennent à un levier basculant 143. Le levier basculant 143 est agencé dans la poignée 122. Plus particulièrement, le levier basculant 143 est monté pivotant dans la coque de la poignée 122. La poignée 122 est amovible par rapport au récipient de travail 102. A cet effet le récipient de travail 102 présente des éléments d'accrochage 129.

La paroi latérale de retenue 113a du dispositif de verrouillage supérieur 150 coopère avec une paroi supérieure 104 du couvercle 103. La paroi supérieure 104 est de révolution. Ainsi le couvercle 103 peut être disposé sur le récipient de travail 102 sans orientation particulière.

Le récipient de travail 102 comporte une pièce de détection 124 appartenant à un dispositif de sécurité 60, mieux visible aux figures 12, 14, 15 et 16. Plus particulièrement, la pièce de détection 124 est montée coulissante dans un guidage extérieur 125 issu du récipient de travail 102. La pièce de détection 124 comporte une partie supérieure 124a, prévue pour coopérer avec un bord périphérique inférieur 136 du couvercle 103, et une partie inférieure 124b, prévue pour coopérer avec un élément du dispositif de sécurité 60.

Le récipient de travail 102 présente en sa partie inférieure une jupe 126 présentant des encoches inférieures 126a, 126b, 126c prévues pour coopérer respectivement avec les bossages supérieurs 72, 73, 74 du socle 70. Les encoches inférieures 126a, 126b, 126c et les bossages supérieurs 72, 73, 74 forment des moyens de blocage en rotation 119 du récipient de travail 102 par rapport au boîtier 1. La jupe 126 forme, avec les parois latérales extérieures des bossages supérieurs 72, 73, 74, des moyens de centrage du récipient de travail 102 par rapport au boîtier 1.

Le récipient de travail 102 présente en sa partie inférieure une découpe inférieure 127. La découpe inférieure 127 forme un organe de retenue inférieur 128. Le dispositif de verrouillage inférieur 160 coopère avec l'organe de retenue inférieur 128.

Tel que montré à la figure 7, le couvercle 103 présente une géométrie de révolution au niveau du bord périphérique inférieur 136 et du bord périphérique supérieur 135. Le couvercle 103 comporte une jupe 137 entourée à distance par le bord périphérique inférieur 136, formant ainsi une rainure annulaire inférieure 138 prévue pour recevoir le bord supérieur du récipient de travail 102. Le bord supérieur du récipient de travail 102 présente également une géométrie de révolution.

La figure 8 montre la poignée 122 retirée du récipient de travail 102. Le levier basculant 143 est monté pivotant autour de l'axe 144. L'organe de commande inférieur 141 et l'organe de verrouillage supérieur 142 sont agencés de part et d'autre de l'axe 144. Un verrou de poignée 145 est monté coulissant sur l'axe 144. Le verrou de poignée 145 est associé à un bouton de déverrouillage de poignée 146 mobile contre un ressort de rappel, non visible aux figures. Le verrou de poignée 145 coopère-avec une butée de verrouillage ménagée sur le récipient de travail 102, non visible aux figures.

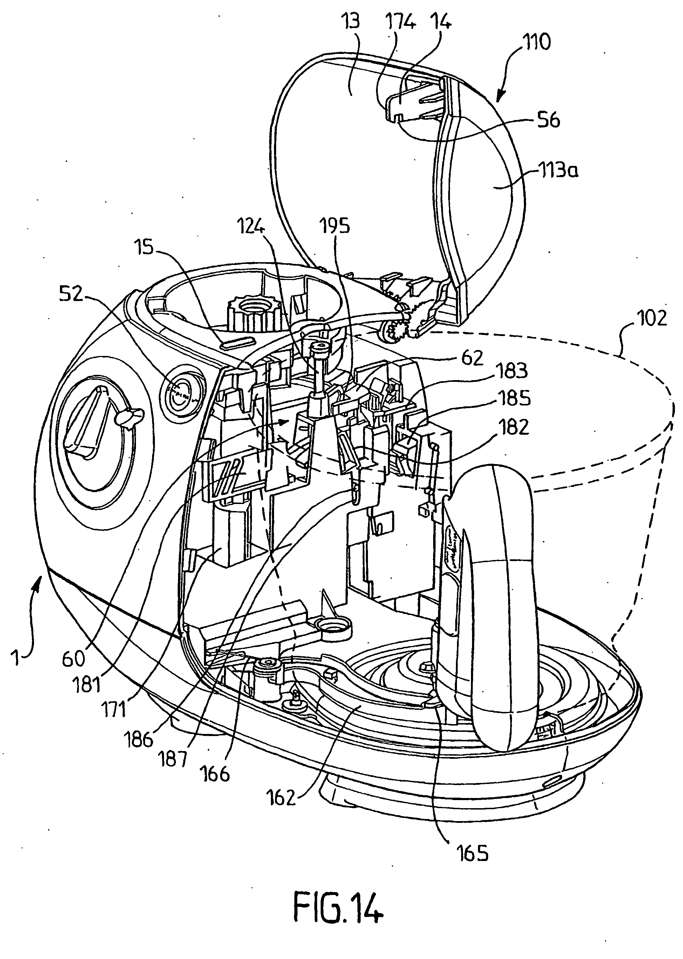

La figure 9 montre le dispositif de verrouillage latéral 140, et une partie du dispositif de verrouillage inférieur 160. Le dispositif de verrouillage inférieur 160 comporte un organe de transmission latéral 161 coopérant avec l'organe de commande inférieur 141. L'organe de transmission latéral 161 est issu d'un levier pivotant 162 monté mobile en rotation autour d'un axe 163 par rapport au boîtier 1 dans le socle 70. Le levier pivotant 162 comporte un organe de commande latéral 164 coopérant avec un organe de transmission inférieur 170 appartenant à une tige de transmission de verrouillage 171 agencée dans le montant 10. La tige de transmission de verrouillage 171 est montée coulissante dans le bâti 9, non représenté à la figure 10, mais visible aux figures 14 à 16, selon une direction sensiblement verticale. La tige de transmission de verrouillage 171 est montée mobile contre un moyen de rappel élastique 172.

L'organe de transmission inférieur 170 est formé par une surface de came prévue pour entraîner en rotation le levier pivotant 162 lorsque le capot 13 est rabattu sur le boîtier 1. Le dispositif de verrouillage inférieur 160 comporte un organe de verrouillage inférieur 165 agencé dans le socle 70. L'organe de verrouillage inférieur 165 appartient au levier pivotant 162 agencé dans le socle 70. L'organe de verrouillage inférieur 165 peut sortir par la découpe latérale extérieure 76 du socle 70, visible sur la figure 5. L'organe de verrouillage inférieur 165 est prévu pour s'engager dans la découpe inférieure 127 du récipient de travail 102. Le levier pivotant 162 est associé à un moyen de rappel élastique 166 prévu pour rentrer l'organe de verrouillage inférieur 165 dans la découpe latérale extérieure 76.

La figure 10 montre le dispositif de verrouillage latéral 140, le dispositif de verrouillage inférieur 160, et le dispositif de sécurité 60. La tige de transmission de verrouillage 171 comporte un organe de commande supérieur 173 coopérant avec un organe de transmission inférieur 174 issu du capot 13, visible à la figure 12. Plus particulièrement, l'organe de transmission inférieur 174 est ménagé sur l'extrémité libre de la languette inférieure 14.

Le dispositif de sécurité 60 comporte une tige de transmission de sécurité 181. La tige de transmission de sécurité 181 est montée coulissante dans le bâti 9, non représenté à la figure 10, selon une direction sensiblement horizontale. La tige de transmission de sécurité 181 comporte une rainure oblique 196 dans laquelle coulisse un tenon 175 issu de la tige de transmission de verrouillage 171. La tige de transmission de sécurité 181 entraîne en rotation une pièce mobile de sécurité 182. La pièce mobile de sécurité 182 présente une surface de came 195 coopérant avec une pièce de transmission intermédiaire 62 montée mobile en rotation sous le siège 7 visible à la figure 1. La pièce de transmission intermédiaire 62 est mobile contre un moyen de rappel élastique, non montré aux figures. La pièce de transmission intermédiaire 62 coopère avec un levier de commande 183 monté pivotant autour d'un axe 184. Le levier de commande 183 coopère avec un interrupteur 185, non représenté à la figure 10, visible à la figure 13. La pièce de détection 124 appartenant au récipient de travail 102 coopère également avec la pièce mobile de sécurité 182. A cet effet la pièce mobile de sécurité 182 peut être déplacée contre un moyen de rappel élastique 194.

La figure 11 montre un mécanisme de blocage 180 de la tige de transmission de verrouillage 171. L'organe de transmission inférieur 170 comporte une conformation de blocage 176 dans laquelle s'engage l'organe de commande latéral 164 du levier pivotant 162 repoussé par le moyen de rappel élastique 166, illustré aux figures 9 et 10, lorsque la poignée 122 est absente du récipient de travail 102 en place sur le socle 70, ou que le récipient de travail 102 n'est pas en place sur le socle 70.

La figure 13 montre le dispositif de sécurité 60 dans la configuration où le capot 13 est verrouillé sur le couvercle 103 placé sur le récipient de travail 102 (non représentés aux figures) agencé sur le socle 70. Le corps 6 du boîtier 1 a été retiré pour laisser apparaître le bâti 9 supportant les pièces du dispositif de sécurité 60.

La pièce mobile de sécurité 182 est guidée en translation dans le bâti 9 au moyen d'un axe 186 coulissant dans une rainure 187 du bâti 9. La pièce mobile de sécurité 182 est entraînée en rotation par un axe 188 monté dans une rainure 189 de la tige de transmission de sécurité 181. La rotation de la pièce mobile de sécurité 182 s'effectue autour de l'axe 186. La pièce mobile de sécurité 182 est entraînée en translation dans la rainure 189 par la pièce de détection 124 mise en place dans l'encoche latérale supérieure 68 du montant 10 (visible à la figure 2). Le levier de commande 183 est monté mobile en rotation dans le bâti 9 au moyen d'un axe 190. Le levier de commande 183 comporte une patte élastique de commande 191 montée contre un moyen de rappel élastique 192. La patte élastique de commande 191 est actionnée par la pièce de transmission 62. Le levier de commande 183 comporte une patte d'actionnement 193 coopérant avec l'interrupteur 185. La patte élastique de commande 191 permet de limiter les efforts exercés sur l'interrupteur 185 et d'augmenter la course de la pièce de transmission 62.

Pour une meilleure compréhension des mécanismes, le corps 6 a été retiré des figures 14 à 16. De plus, le récipient de travail 102 et le cas échéant le couvercle 103 (visibles sur la figure 6) sont représentés en pointillés pour plus de clarté.

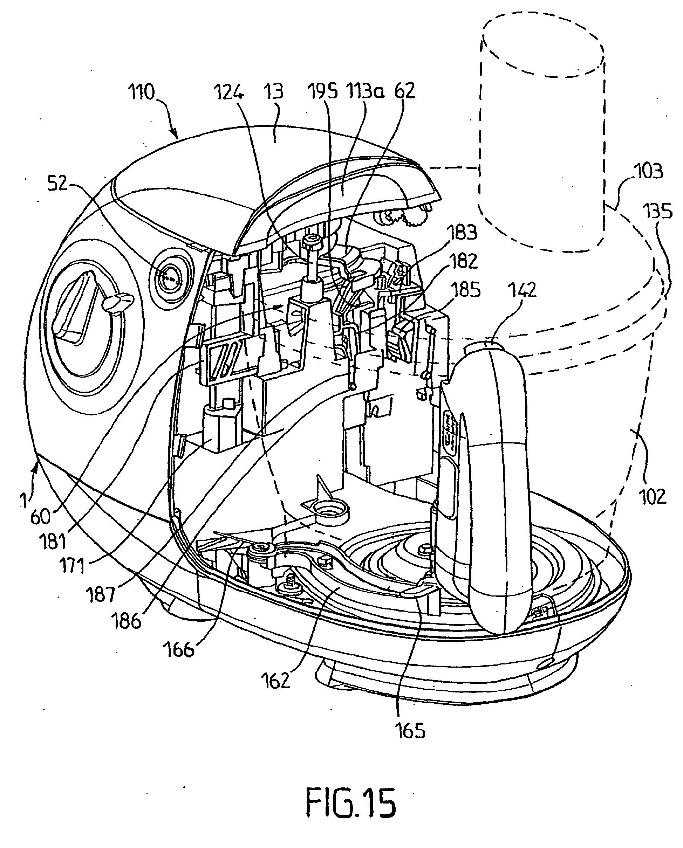

Le capot 13 forme une pièce de maintien 110 montée basculant sur le montant 10, mobile entre une position déverrouillée, illustrée à la figure 14, dans laquelle le couvercle 103 peut être mis en place et retiré sur le récipient de travail 102, et une position de verrouillage, illustrée à la figure 15, dans laquelle la pièce de maintien 110 maintient le couvercle sur le récipient de travail 102 disposé sur le socle 70. La pièce de maintien 110 coopère avec le dispositif de verrouillage inférieur 160. L'organe de verrouillage inférieur 165 est mobile entre une position de repos, en l'absence de récipient de travail 102 sur le socle 70, dans laquelle le moyen de rappel élastique 166 repousse l'organe de commande latéral 164 contre la conformation de blocage 176, tel qu'illustré à la figure 11, une position rétractée, illustrée à la figure 14, dans laquelle le récipient de travail 102 peut être retiré du socle 70, et une position sortie, illustrée à la figure 15, dans laquelle l'organe de verrouillage inférieur 165 retient l'organe de retenue inférieur 128, visible sur la figure 6. L'organe de verrouillage supérieur 142 (visible sur la figure 6) est mobile entre une position rétractée, illustrée à la figure 14, dans laquelle le couvercle 103 peut être mis en place ou retiré du récipient de travail 102, et une position sortie, illustrée à la figure 15, dans laquelle l'organe de verrouillage supérieur 142 retient l'organe de retenue supérieur 139, visible sur la figure 6.

Le fonctionnement de la présente invention est le suivant.

Lorsque la pièce mobile 110 formée par le capot 13 occupe la position déverrouillée illustrée à la figure 14, l'utilisateur peut mettre en place le récipient de travail 102 et le couvercle 103. Lorsque l'utilisateur place le récipient de travail 102 sur le socle 70, les encoches 126a, 126b, 126c viennent en place sur les bossages supérieurs 72, 73, 74. L'organe de commande inférieur 141 du dispositif de verrouillage latéral 140 s'engage dans la découpe supérieure 75 et déplace l'organe de transmission latéral 161 mobile contre le moyen de rappel élastique 166 vers une position d'attente dans laquelle l'organe de commande latéral 164 est dégagé de la conformation de blocage 176. La tige de transmission de verrouillage 171 est repoussée vers le haut par le moyen de rappel élastique 172. La tige de transmission de sécurité 181 occupe une position d'attente. La pièce mobile de sécurité 182 est repoussée vers le haut et éloignée de l'interrupteur 185 par le moyen de rappel élastique 194. L'axe 186 est en position haute dans la rainure 187. La pièce de détection 124 est en position haute dans l'encoche latérale supérieure 68. La pièce de transmission 62 est repoussée par le moyen de rappel associé vers la pièce mobile de sécurité 182. Le levier de commande 183 est éloigné de l'interrupteur 185, du fait que la surface de came 195 ne déplace pas suffisamment la pièce de transmission 62.

Lorsque l'utilisateur met en place le couvercle 103 sur le récipient de travail 102, le bord périphérique inférieur 136 vient en contact avec la pièce de détection 124. Lorsque l'utilisateur referme le capot 13 sur le montant 10, tel que montré à la figure 15, l'élément d'accrochage 56 vient en prise avec l'élément de retenue 51, tel que montré à la figure 12. La paroi latérale de retenue 113a du capot 13 maintient la paroi supérieure 104 du couvercle 103. La pièce mobile 110 formée par le capot 13 occupe la position de verrouillage. Le dispositif de verrouillage supérieur 150 est verrouillé.

Par ailleurs, la pièce de maintien 110 coopère avec le dispositif de verrouillage inférieur 160 par l'intermédiaire de la tige de transmission de verrouillage 171. L'organe de transmission inférieur 174 repousse l'organe de commande supérieur 173 du dispositif de verrouillage inférieur 160, tel que montré à la figure 12. La tige de transmission de verrouillage 171 est repoussée vers le bas contre le moyen de rappel élastique 172. L'organe de transmission inférieur 170 déplace l'organe de commande latéral 164 contre le moyen de rappel élastique 166. Le levier pivotant 162 pivote autour de l'axe 163. L'organe de verrouillage inférieur 165 sort par la découpe latérale extérieure 76 et s'engage dans l'organe de retenue inférieur 128 du récipient de travail 102. Le récipient de travail 102 est ainsi maintenu sur le socle 70. Le dispositif de verrouillage inférieur 160 est verrouillé.

De plus, l'organe de transmission latéral 161 repousse l'organe de commande inférieur 141. Le levier basculant 143 tourne autour de l'axe 144. L'organe de verrouillage supérieur 142 vient recouvrir partiellement le bord périphérique supérieur 135 du couvercle 103. Le dispositif de verrouillage latéral 140 est verrouillé.

Ainsi le couvercle 103 et le récipient de travail 102 sont maintenus en trois points. Le récipient de travail 102 est mis en place sur le socle 70 selon une orientation prédéterminée, mais sans nécessiter de rotation ultérieure pour obtenir un verrouillage. Le couvercle 103 est mis en place sur le récipient de travail 102 sans orientation prédéterminée, ce qui offre une liberté de positionnement de la goulotte 134. Le verrouillage du couvercle 103 et du récipient de travail 102 s'effectue simplement en manoeuvrant la pièce de maintien 110 formée par le capot 13.

En outre, la tige de transmission de sécurité 181 est déplacée vers sa position active par la tige de transmission de verrouillage 171. La pièce mobile de sécurité 182 est repoussée latéralement par la tige de transmission de sécurité 181 contre le moyen de rappel élastique 194. De plus, la pièce mobile de sécurité 182 est repoussée vers le bas par la pièce de détection 124. L'axe 186 est descendu dans la rainure 187. La pièce de transmission 62 est repoussée par la pièce mobile de sécurité 182 vers le levier de commande 183. La surface de came 195 permet un déplacement suffisant de la pièce de transmission 62 pour que le levier de commande 183 occupe une position active et actionne l'interrupteur 185. Le dispositif de sécurité 60 permet alors le fonctionnement de l'appareil.

Par contre, si le capot 13 est rabattu en l'absence du couvercle 103, le dispositif de verrouillage supérieur 150, le dispositif de verrouillage inférieur 160, le dispositif de verrouillage latéral 140 occupent les configurations précédemment décrites, mais la pièce de détection 124 ne peut repousser la pièce mobile de sécurité 182 vers le bas. De ce fait la surface de came 195 ne repousse pas suffisamment la pièce de transmission intermédiaire 62, et l'interrupteur 185 ne peut être actionné. Le dispositif de sécurité 60 ne permet pas le fonctionnement de l'appareil.

De plus, la pièce de détection 124 est alors logée dans l'encoche latérale supérieure 68 du montant 10, derrière le récipient de travail 102, et sous la pièce de maintien 110 formée par le capot 13. De ce fait, la pièce de détection 124. ne peut être atteinte par l'utilisateur.

Le déverrouillage du couvercle 103 et du récipient de travail 102 s'effectue simplement en actionnant le bouton de déverrouillage 52. L'élément de retenue 51 est alors éloigné de l'élément d'accrochage 56, et le capot 13 est ramené en position relevée par le moyen de rappel élastique 18. L'utilisateur peut alors retirer le couvercle 103 et le récipient de travail 102.

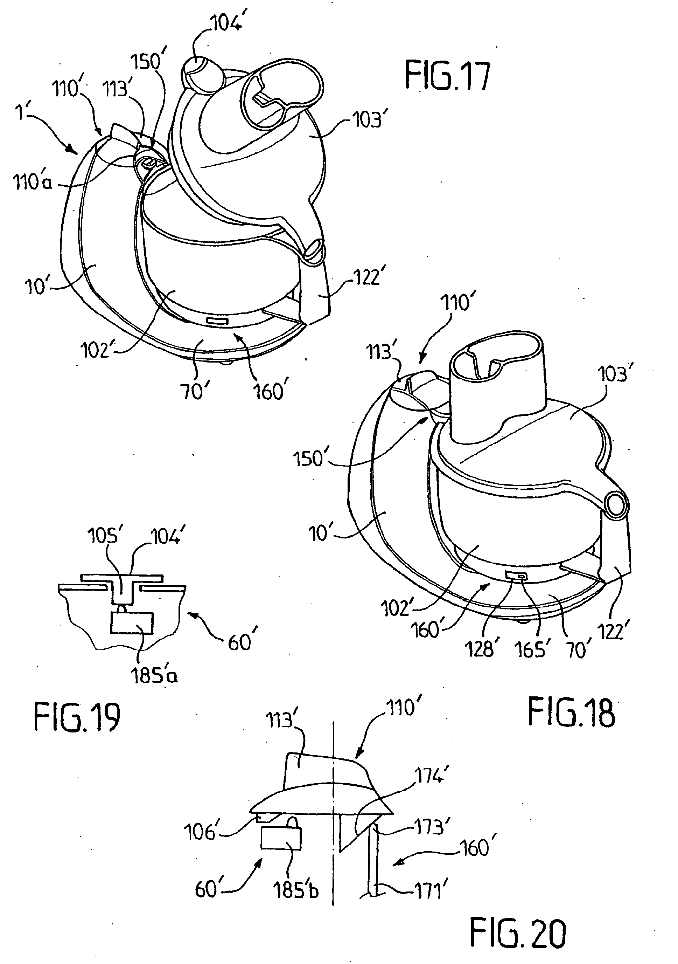

Un deuxième exemple de réalisation est illustré aux figures 17 à 20. Cet exemple de réalisation diffère de l'exemple de réalisation précédent en ce que le couvercle 103' est monté articulé sur le récipient de travail 102', en ce que la poignée 122' est dépourvue de dispositif de verrouillage latéral, et en ce que boîtier 1' comporte une pièce de maintien 110' formée par un verrou rotatif 113' monté pivotant sur le montant 10'. Le verrou rotatif 113' est agencé sur le dessus du montant 10'. L'appareil comporte un dispositif de verrouillage supérieur 150', un dispositif de verrouillage inférieur 160', et un dispositif de sécurité 60'. La paroi supérieure 104' du couvercle 103' maintenue par la pièce de maintien 110' n'occupe qu'une partie de la circonférence du couvercle 103'. La pièce de maintien 110' comporte une découpe 110'a prévue pour laisser le passage de la paroi supérieure 104'.

La figure 17 montre le verrou rotatif 113' dans une position déverrouillée, dans laquelle le couvercle 103' peut être mis en place et retiré du récipient de travail 102' disposé sur le socle 70'. L'organe de verrouillage inférieur du dispositif de verrouillage inférieur 160' est en position rétractée dans le socle 70'.

La figure 18 montre le verrou rotatif 113' dans une position de verrouillage, dans laquelle le verrou rotatif 113' maintient le couvercle 103 sur le récipient de travail 102' disposé sur le socle 70'. L'organe de verrouillage inférieur 165' est en position sortie dans le socle 70' et retient un organe de retenue inférieur 128' ménagé sur le récipient de travail 102'.

La figure 19 montre une première partie du dispositif de sécurité 60' commandée par un organe de commande inférieur 105' issu de la paroi supérieure 104' susceptible d'étre maintenue par la pièce de maintien 110'. L'organe de commande inférieur 105' coopère avec un interrupteur 185'a.

La figure 20 montre une deuxième partie du dispositif de sécurité 60' commandée par un autre organe de commande inférieur 106' issu de la pièce de maintien 110'. L'organe de commande inférieur 106' coopère avec un autre interrupteur 185'b. L'organe de commande inférieur 106' est formé par exemple par une surface de came. La figure 20 montre également la pièce de maintien 110' présentant un organe de transmission inférieur formé par une surface de came 174' susceptible de coopérer avec un organe de commande supérieur 173' de la tige de transmission de verrouillage 171' du dispositif de verrouillage inférieur 160'.

Pour verrouiller ou déverrouiller le couvercle 103' sur le récipient de travail 102' disposé sur le socle 70', l'utilisateur tourne la pièce de maintien 110' dans un sens ou dans l'autre. La surface de came 174' déplace la tige de transmission de verrouillage 171' contre le moyen de rappel associé et actionne le dispositif de verrouillage inférieur 160'.

A titre de variante, d'autres constructions peuvent être envisagées pour les dispositifs de verrouillage et le dispositif de sécurité.

A titre de variante, d'autres moyens de centrage du récipient de travail 102 sur le boîtier 1 peuvent être envisagés, notamment une paroi latérale annulaire externe ou interne.

A titre de variante, l'organe de retenue supérieur 139 et la paroi supérieure 104 du couvercle 103 ne présentent pas nécessairement une géométrie de révolution. Dans ce cas, la liberté de positionnement en rotation du couvercle 103 n'est que partielle.

A titre de variante pour le premier exemple de réalisation, la poignée 122 n'est pas nécessairement amovible.

A titre de variante pour le premier exemple de réalisation, le dispositif de verrouillage latéral 140 pourrait être supprimé.

La présente invention n'est nullement limitée aux exemples de réalisation décrits et à leurs variantes, mais englobe de nombreuses modifications dans le cadre des revendications.

## Revendications

1. Appareil électroménager de préparation culinaire, comportant un boîtier (1 ; 1') présentant un montant (10 ; 10') adjacent à un socle (70 ; 70'), un récipient de travail (102 ; 102') monté amovible sur le socle (70 ; 70'), un couvercle (103 ; 103') fermant le récipient de travail (102 ; 102'), une pièce de maintien (110; 110') montée sur le montant (10 ; 10'), la pièce de maintien (110 ; 110') étant mobile entre une position déverrouillée, dans laquelle le couvercle (103 ; 103') peut être mis en place et retiré du récipient de travail (102; 102') disposé sur le socle (70 ; 70'), et une position de verrouillage, dans laquelle la pièce de maintien (110 ; 110') maintient le couvercle (103 ; 103') sur le récipient de travail (102 ; 102') disposé sur le socle (70; 70'), **caractérisé en ce que** la pièce de maintien (110; 110') coopère avec un dispositif de verrouillage inférieur (160 ; 160') agencé dans le boîtier (1 ; 1'), le dispositif de verrouillage inférieur (160 ; 160') comportant un organe de verrouillage inférieur (165 ; 165') agencé dans le socle (70 ; 70'), l'organe de verrouillage inférieur (165; 165') étant mobile entre une position rétractée dans laquelle le récipient de travail (102 ; 102') peut être retiré du socle (70 ; 70') et une position sortie dans laquelle l'organe de verrouillage inférieur (165 ; 165') retient un organe de retenue inférieur (128 ; 128') ménagé sur le récipient de travail (102 ; 102'):

2. Appareil électroménager de préparation culinaire selon la revendication 1, **caractérisé en ce que** la pièce de maintien (110; 110') coopère avec une tige de transmission de verrouillage (171 ; 171') agencée dans le montant (10 ; 10').

3. Appareil électroménager de préparation culinaire selon la revendication 2, **caractérisé en ce que** la tige de transmission de verrouillage (171 ; 171') est montée mobile contre un moyen de rappel élastique (172).

4. Appareil électroménager de préparation culinaire selon l'une des revendications 1 à 3, **caractérisé en ce que** l'organe de verrouillage inférieur (165 ; 165') appartient à un levier pivotant (162) agencé dans le socle (70 ; 70').

5. Appareil électroménager de préparation culinaire selon la revendication 4, **caractérisé en ce que** le levier pivotant (162) est associé à un moyen de rappel élastique (166).

6. Appareil électroménager de préparation culinaire selon l'une des revendications 1 à 5, **caractérisé en ce que** le dispositif de verrouillage inférieur (160) coopère avec un dispositif de verrouillage latéral (140) agencé sur le récipient de travail (102), le dispositif de verrouillage latéral (140) comportant un organe de verrouillage supérieur (142) mobile entre une position rétractée dans laquelle le couvercle (103) peut être retiré du récipient de travail (102) et une position sortie dans laquelle l'organe de verrouillage supérieur (142) retient un organe de retenue supérieur (139) ménagé sur le couvercle (103).

7. Appareil électroménager de préparation culinaire selon la revendication 6, **caractérisé en ce que** l'organe de verrouillage supérieur (142) appartient à un levier basculant (143).

8. Appareil électroménager de préparation culinaire selon l'une des revendications 6 ou 7, **caractérisé en ce que** le dispositif de verrouillage latéral (140) est agencé dans une poignée (122) du récipient de travail (102).

9. Appareil électroménager de préparation culinaire selon la revendication 8, **caractérisé en ce que** la poignée (122) est amovible.

10. Appareil électroménager de préparation culinaire selon les revendications 2, 4, 5, 6, 8 et 9, **caractérisé en ce que** la tige de transmission de verrouillage (171) présente un organe de transmission inférieur (170) coopérant avec un organe de commande latéral (164) du levier pivotant (162) et **en ce que** l'organe de transmission inférieur (170) comporte une conformation de blocage (176) dans laquelle s'engage l'organe de commande latéral (164) repoussé par le moyen de rappel élastique (166) lorsque la poignée (122) est absente du récipient de travail (102) en place sur le socle (70) ou que le récipient de travail (102) n'est pas en place sur le socle (70).

11. Appareil électroménager de préparation culinaire selon l'une des revendications 1 à 10, **caractérisé en ce que** la pièce de maintien (110) est formée par un capot (13) monté basculant sur le montant (10), et **en ce que** le capot (13) comporte un élément d'accrochage (56) coopérant avec un élément de retenue (51) monté mobile dans le boîtier (1), l'élément de retenue (51) étant associé à un bouton de déverrouillage (52).

12. Appareil électroménager de préparation culinaire selon la revendication 11, **caractérisé en ce que** le capot (13) comporte un organe de transmission inférieur (174) coopérant avec un organe de commande supérieur (173) du dispositif de verrouillage inférieur (160).

13. Appareil électroménager de préparation culinaire selon l'une des revendications 11 ou 12, **caractérisé en ce que** le capot (13) comporte une paroi latérale de retenue (113a) coopérant avec une paroi supérieure (104) du couvercle (103).

14. Appareil électroménager de préparation culinaire selon l'une des revendications 1 à 10, **caractérisé en ce que** la pièce de maintien (110') est formée par un verrou rotatif (113') monté pivotant sur le montant (10').

15. Appareil électroménager de préparation culinaire selon la revendication 14, **caractérisé en ce que** le verrou rotatif (113') comporte une surface de came (174') actionnant un organe de commande supérieur (173') du dispositif de verrouillage inférieur (160').

16. Appareil électroménager de préparation culinaire selon l'une des revendications 1 à 15, **caractérisé en ce que** le socle (70) et le récipient de travail (102) comportent des moyens de blocage en rotation (119) du récipient de travail (102) par rapport au boîtier (1).

## Patentansprüche

1. Elektrohaushaltsgerät zum Zubereiten von Nahrungsmitteln, mit einem Gehäuse (1; 1'), das eine an einen Sockel (70; 70') angrenzende Säule (10; 10') aufweist, einem Arbeitsbehälter (102; 102'), der abnehmbar am Sockel (70; 70') angebracht ist, einem Deckel (103; 103'), der den Arbeitsbehälter (102; 102') schließt, und einem Halteteil (110; 110'), das an der Säule (10; 10') angebracht ist, wobei das Halteteil (110; 110') beweglich ist zwischen einer entriegelten Position, in der der Deckel (103; 103') auf den auf dem Sockel (70; 70') angeordneten Arbeitsbehälter (102; 102') aufgesetzt und von diesem entfernt werden kann, und einer Verriegelungsposition, in der das Halteteil (110; 110') den Deckel (103; 103') auf dem Arbeitsbehälter (102; 102') hält, welcher auf dem Sockel (70; 70') angeordnet ist, **dadurch gekennzeichnet, dass** das Halteteil (110; 110') mit einer unteren Verriegelungsvorrichtung (160; 160') zusammenwirkt, die im Gehäuse (1; 1') angeordnet ist, wobei die untere Verriegelungsvorrichtung (160; 160') ein unteres Verriegelungsorgan (165; 165') aufweist, das im Sockel (70; 70') angeordnet ist, wobei das untere Verriegelungsorgan (165; 165') zwischen einer eingezogenen Position, in der der Arbeitsbehälter (102; 102') vom Sockel (70; 70') entfernt werden kann, und einer ausgezogenen Position bewegbar ist, in der das untere Verriegelungsorgan (165; 165') ein unteres Rückhalteorgan (128; 128') hält, welches am Arbeitsbehälter (102; 102') vorgesehen ist.

2. Elektrohaushaltsgerät zum Zubereiten von Nahrungsmitteln nach Anspruch 1, **dadurch gekennzeichnet, dass** das Halteteil (110; 110') mit einer Stange (171; 171') zur Übertragung der Verriegelung zusammenwirkt, die in der Säule (10; 10') angeordnet ist.

3. Elektrohaushaltsgerät zum Zubereiten von Nahrungsmitteln nach Anspruch 2, **dadurch gekennzeichnet, dass** die Stange (171; 171') zur Übertragung der Verriegelung gegen ein elastisches Rückstellmittel (172) bewegbar angebracht ist.

4. Elektrohaushaltsgerät zum Zubereiten von Nahrungsmitteln nach einem der Ansprüche 1 bis 3, **dadurch gekennzeichnet, dass** das untere Verriegelungsorgan (165; 165') zu einem Schwenkhebel (162) gehört, der im Sockel (70; 70') angeordnet ist.

5. Elektrohaushaltsgerät zum Zubereiten von Nahrungsmitteln nach Anspruch 4, **dadurch gekennzeichnet, dass** der Schwenkhebel (162) einem elastischen Rückstellmittel (166) zugeordnet ist.

6. Elektrohaushaltsgerät zum Zubereiten von Nahrungsmitteln nach einem der Ansprüche 1 bis 5, **dadurch gekennzeichnet, dass** die untere Verriegelungsvorrichtung (160) mit einer seitlichen Verriegelungsvorrichtung (140) zusammenwirkt, die am Arbeitsbehälter (102) angeordnet ist, wobei die seitliche Verriegelungsvorrichtung (140) ein oberes Verriegelungsorgan (142) aufweist, das zwischen einer eingezogenen Position, in der der Deckel (103) vom Arbeitsbehälter (102) entfernt werden kann, und einer ausgezogenen Position bewegbar ist, in der das obere Verriegelungsorgan (142) ein oberes Rückhalteorgan (139) hält, das am Deckel (103) vorgesehen ist.

7. Elektrohaushaltsgerät zum Zubereiten von Nahrungsmitteln nach Anspruch 6, **dadurch gekennzeichnet, dass** das obere Verriegelungsorgan (142) zu einem Kipphebel (143) gehört.

8. Elektrohaushaltsgerät zum Zubereiten von Nahrungsmitteln nach Anspruch 6 oder 7, **dadurch gekennzeichnet, dass** die seitliche Verriegelungsvorrichtung (140) in einem Griff (122) des Arbeitsbehälters (102) angeordnet ist.

9. Elektrohaushaltsgerät zum Zubereiten von Nahrungsmitteln nach Anspruch 8, **dadurch gekennzeichnet, dass** der Griff (122) abnehmbar ist.

10. Elektrohaushaltsgerät zum Zubereiten von Nahrungsmitteln nach den Ansprüchen 2, 4, 5, 6, 8 und 9, **dadurch gekennzeichnet, dass** die Stange (171) zur Übertragung der Verriegelung ein unteres Übertragungsorgan (170) aufweist, das mit einem seitlichen Steuerorgan (164) des Schwenkhebels (162) zusammenwirkt, und dass das untere Übertragungsorgan (170) eine Blockierungsform (176) aufweist, in die das seitliche Steuerorgan (164) eingreift, welches von dem elastischen Rückstellmittel (166) zurückgedrückt wird, wenn der Griff (122) nicht am Arbeitsbehälter (102) vorhanden ist, welcher auf dem Sockel (70) angeordnet ist, oder wenn der Arbeitsbehälter (102) nicht auf dem Sockel (70) angeordnet ist.

11. Elektrohaushaltsgerät zum Zubereiten von Nahrungsmitteln nach einem der Ansprüche 1 bis 10, **dadurch gekennzeichnet, dass** das Halteteil (110) durch eine Abdeckkappe (13) gebildet ist, die kippbar an der Säule (10) angebracht ist, und dass die Abdeckkappe (13) ein Einhakelement (56) aufweist, das mit einem Rückhaltelement (51) zusammenwirkt, welches im Gehäuse (1) bewegbar angebracht ist, wobei das Rückhalteelement (51) einem Entriegelungsknopf (52) zugeordnet ist.

12. Elektrohaushaltsgerät zum Zubereiten von Nahrungsmitteln nach Anspruch 11, **dadurch gekennzeichnet, dass** die Abdeckkappe (13) ein unteres Übertragungsorgan (174) aufweist, das mit einem oberen Steuerorgan (173) der unteren Verriegelungsvorrichtung (160) zusammenwirkt.

13. Elektrohaushaltsgerät zum Zubereiten von Nahrungsmitteln nach Anspruch 11 oder 12, **dadurch gekennzeichnet, dass** die Abdeckkappe (13) eine seitliche Rückhaltewand (113a) aufweist, die mit einer oberen Wand (104) des Deckels (103) zusammenwirkt.

14. Elektrohaushaltsgerät zum Zubereiten von Nahrungsmitteln nach einem der Ansprüche 1 bis 10, **dadurch gekennzeichnet, dass** das Halteteil (110') durch ein Drehschloss (113') gebildet ist, das schwenkbar an der Säule (10') angebracht ist.

15. Elektrohaushaltsgerät zum Zubereiten von Nahrungsmitteln nach Anspruch 14, **dadurch gekennzeichnet, dass** das Drehschloss (113') eine Nockenfläche (174') aufweist, die ein oberes Steuerorgan (173') der unteren Verriegelungsvorrichtung (160') betätigt.

16. Elektrohaushaltsgerät zum Zubereiten von Nahrungsmitteln nach einem der Ansprüche 1 bis 15, **dadurch gekennzeichnet, dass** der Sockel (70) und der Arbeitsbehälter (102) Mittel (119) zur Blockierung der Drehung des Arbeitsbehälters (102) bezüglich des Gehäuses (1) aufweisen.

## Claims

1. A food-processing household electrical appliance comprising a housing (1; 1') presenting an upright (10; 10') adjacent to a base (70; 70'), a working receptacle (102; 102') mounted removably on the base (70; 70'), a lid (103; 103') closing the working receptacle (102; 102'), a holding piece (110; 110') mounted on the upright (10; 10'), the holding piece (110; 110') being mounted to move between an unlocked position, in which the lid (103; 103') can be put in place on and removed from the working receptacle (102; 102') disposed on the base (70; 70'), and a locking position, in which the holding piece (110; 110') holds the lid (103; 103') on the working receptacle (102; 102') disposed on the base (70; 70'), said food-processing household electrical appliance being **characterized in that** the holding piece (110; 110') co-operates with a bottom locking device (160; 160') arranged in the housing (1; 1'), the bottom locking device (160; 160') having a bottom locking member (165; 165') arranged in the base (70; 70'), the bottom locking member (165; 165') being mounted to move between a retracted position in which the working receptacle (102; 102') can be removed from the base (70; 70'), and a deployed position in which the bottom locking member (165; 165') retains a bottom retaining member (128; 128') provided on the working receptacle (102; 102').

2. A food-processing household electrical appliance according to claim 1, **characterized in that** the holding piece (110; 110') co-operates with a locking transmission rod (171; 171') arranged in the upright (10; 10').

3. A food-processing household electrical appliance according to claim 2, **characterized in that** the locking transmission rod (171; 171') is mounted to move against drive from resilient return means (172).

4. A food-processing household electrical appliance according to any one of claims 1 to 3, **characterized in that** the bottom locking member (165; 165') belongs to a pivotally-mounted lever (162) arranged in the base (70; 70').

5. A food-processing household electrical appliance according to claim 4, **characterized in that** the pivotally-mounted lever (162) is associated with resilient return means (166).

6. A food-processing household electrical appliance according to any one of claims 1 to 5, **characterized in that** the bottom locking device (160) co-operates with a side locking device (140) arranged on the working receptacle (102), the side locking device (140) having a top locking member (142) mounted to move between a retracted position in which the lid (103) can be removed from the working receptacle (102) and a deployed position in which the top locking member (142) retains a top retaining member (139) provided on the lid (103).

7. A food-processing household electrical appliance according to claim 6, **characterized in that** the top locking member (142) belongs to a tilting lever (143).

8. A food-processing household electrical appliance according to claim 6 or claim 7, **characterized in that** the side locking device (140) is arranged in a handle (122) of the working receptacle (102).

9. A food-processing household electrical appliance according to claim 8, **characterized in that** the handle (122) is removable.

10. A food-processing household electrical appliance according to claims 2, 4, 5, 6, 8, and 9, **characterized in that** the locking transmission rod (171) presents a bottom transmission member (170) co-operating with a side control member (164) of the pivotally-mounted lever (162), and **in that** the bottom transmission member (170) is provided with a locking shape (176) into which the side control member (164) engages under drive from the resilient return means (166) when the handle (122) is absent from the working receptacle (102) in place on the base (70) or when the working receptacle (102) is not in place on the base (70).

11. A food-processing household electrical appliance according to any one of claims 1 to 10, **characterized in that** the holding piece (110) is formed by a cap (13) mounted to tilt on the upright (10), and **in that** the cap (13) is provided with a catch element (56) co-operating with a retaining element (51) mounted to move in the housing (1), the retaining element (51) being associated with an unlocking button (52).

12. A food-processing household electrical appliance according to claim 11, **characterized in that** the cap (13) has a bottom transmission member (174) co-operating with a top control member (173) of the bottom locking device (160).

13. A food-processing household electrical appliance according to claim 11 or claim 12, **characterized in that** the cap (13) has a retaining side wall (113a) co-operating with a top wall (104) of the lid (103).

14. A food-processing household electrical appliance according to any one of claims 1 to 10, **characterized in that** the holding piece (110') is formed by a rotary latch (113') mounted to turn on the upright (10').

15. A food-processing household electrical appliance according to claim 14, **characterized in that** the rotary latch (113') has a cam surface (174') actuating a top control member (173') of the bottom locking device (160').

16. A food-processing household electrical appliance according to any one of claims 1 to 15, **characterized in that** the base (70) and the working receptacle (102) have locking means (119) for preventing the working receptacle (102) from turning relative to the housing (1).
